# FASCICULE DE BREVET EUROPEEN

(11) **EP 0 691 725 B1**
(45) Date de publication et mention de la délivrance du brevet: **06.10.1999**
(21) Numéro de dépôt: 95401548.3
(22) Date de dépôt: 28.06.1995
(51) Int. Cl.: H02J 7/00

(54) **Dispositif régulateur pour batterie d'accumulateurs électriques**
Regelungsvorrichtung für eine elektrische Akkumulatorbatterie
Controlling device for an electric storage battery

(30) Priorité: 04.07.1994 FR 9408211
(43) Date de publication de la demande: 10.01.1996
(73) Titulaire: ALCATEL, 75382 Paris Cédex 08 (FR)
(72) Inventeur: Mangez, Jean-Claude, F-17000 La Rochelle (FR)
(74) Mandataire: Schaub, Bernard

(56) Documents cités:
- EP-A- 0 662 744
- WO-A-93/10589
- DE-C- 959 743
- DE-C- 3 438 783
- US-A- 3 980 940
- CONFERENCE PROCEEDINGS OF INTELEC 86, 19 Octobre 1986, TORONTO,CANADA pages 355 - 360 D.BJOERK 'MAINTENANCE OF BATTERIES'

## Description

L'invention concerne un dispositif régulateur pour batterie d'accumulateurs électriques et en particulier pour batterie dont la tension est fonction de l'état de charge, comme notamment les batteries du type à couple lithium ion.

Il est connu que certaines batteries et en particulier celles du type évoqué ci-dessus supportent mal les décharges profondes et les surcharges, il faut donc prendre des précautions particulières pour éviter celles-ci en cours d'exploitation, notamment lorsque ces batteries comportent des éléments raccordés en série.

En effet, pour diverses raisons connues, les divers éléments constitutifs d'une même batterie ne fonctionnent pas tous exactement dans les mêmes conditions et ne vieillissent pas tous de manière identique, il n'est souvent plus suffisant de contrôler le fonctionnement d'une batterie à partir de mesures électriques effectuées en cours d'utilisation au niveau de ses bornes d'extrémité.

En effet, en particulier dans le cas de batteries comportant des éléments en série, les minimes différences existant initialement entre éléments tendent à se creuser au fur et à mesure de l'exploitation au détriment des éléments les moins performants dont la dégradation entraîne plus ou moins rapidement celle des autres éléments.

Il est donc connu d'associer des mesures effectuées élément par élément aux mesures déjà effectuées au niveau des bornes d'extrémité pour une batterie (voir WO93/10589), afin de pouvoir agir sur la batterie en cours d'exploitation, tant en cours de charge qu'en cours de décharge, en fonction des comportements respectifs des éléments pris individuellement et de celui de l'ensemble que composent ces éléments. Il est également connu d'effectuer les mêmes opérations au niveau de modules identiquement composés d'un même nombre d'éléments dans le cas de batteries comportant de grands nombres d'éléments.

L'invention propose donc un dispositif régulateur pour batterie d'accumulateurs électriques, notamment pour batterie dont la tension est fonction de l'état de charge et qui est constituée de "n" modules identiques raccordés en série.

Selon une caractéristique de l'invention ce dispositif comporte "n-1" modules de régulation respectivement affectés chacun à deux modules de batterie qui sont raccordés en série, chaque module de régulation comportant des moyens régulateurs pour amener la tension aux bornes de chacun des deux modules de batterie en série auxquels il est associé à une même valeur par dérivation d'un courant pris aux bornes de celui dont la tension est la plus forte jusqu'à abaissement de cette tension plus forte jusqu'à la valeur présente aux bornes du module dont la tension est la plus faible.

L'invention, ses caractéristiques et ses avantages sont précisés dans la description qui suit en liaison avec les figures évoquées ci-dessous.

La figure 1 présente un schéma montrant une batterie équipée d'un dispositif régulateur selon l'invention.

La figure 2 présente un schéma d'une batterie équipée d'une variante de dispositif régulateur selon l'invention.

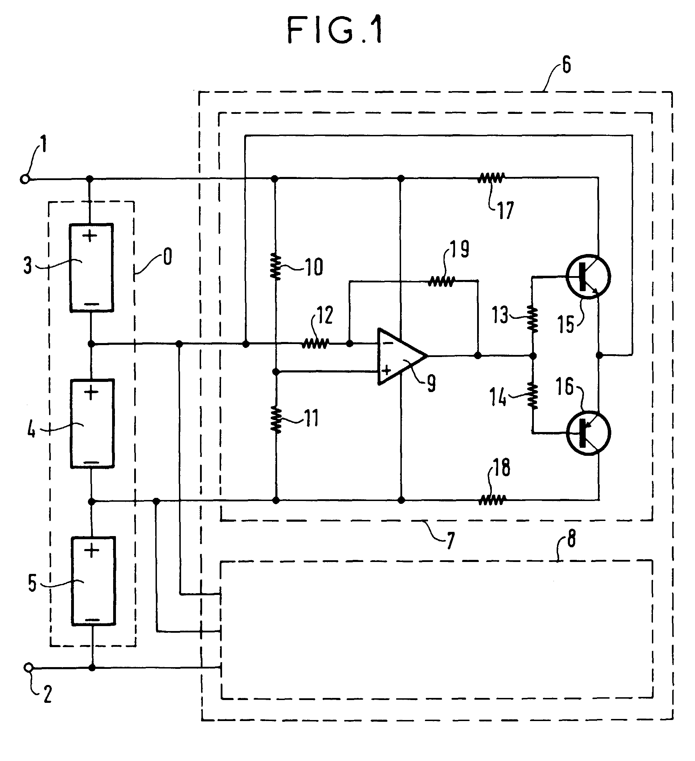

La batterie d'accumulateurs électriques 0 présentée en figure 1 est supposée comporter un nombre entier "n" de modules qui sont raccordés en série entre deux bornes 1 et 2, l'une positive et l'autre négative, auxquelles il est possible de raccorder une charge et/ou un chargeur non représentés. Chaque module est préférablement composé d'un seul élément, bien qu'il soit possible de grouper plusieurs éléments en série et/ou en parallèle dans un même module.

Les "n" modules, ici à un élément, de la batterie 0 qui sont au nombre de trois dans l'exemple envisagé, sont ici référencés 3, 4 et 5, ils sont associés à un dispositif de régulation 6 selon l'invention. Ce dispositif de régulation est à structure modulaire et comporte "n-1" modules de régulation identiques qui sont associés chacun à un couple de modules de batterie interconnectés, soit deux modules de régulation 7 et 8, identiques, associés l'un aux modules 3, 4 et l'autre aux modules 4, 5, dans l'exemple ici envisagé.

Chaque module de régulation réalise ici un équilibrage de l'état de charge entre les deux modules de batterie auxquels il est associé, en assurant un équilibrage permanent en tension à leur niveau. A cet effet, un montage comparateur prend en compte les deux tensions présentes aux bornes des modules de batterie en série auxquels chaque module de régulation est associé, telles les tensions aux bornes des modules 3 et 4 dans le cas du module de régulation 7. Ce montage comparateur est par exemple réalisé au moyen d'un amplificateur opérationnel, référencé 9 dans le cas du module régulateur 7, et d'un pont diviseur à résistances, égales, référencées 10 et 11 pour ce module 7. La tension présente aux bornes de l'ensemble formé par les modules de batterie 3, 4 est appliqué aux bornes du pont diviseur à résistances 10, 11 dont le point milieu est relié à une borne non-inverseuse de l'amplificateur 9. Ce dernier a par ailleurs une borne inverseuse reliée au point commun aux deux modules de batterie 3, 4 évoqués ci-dessus, via une résistance 12.

La sortie de l'amplificateur 9 est reliée à un point commun à deux résistances 13, 14 qui sont par ailleurs reliées l'une à la base d'un transistor 15, de type NPN, et l'autre à la base d'un transistor 16, de type PNP. Ces deux transistors sont reliés en série par leurs liaisons émetteur-collecteur respectives aux bornes extrêmes de l'ensemble formé par les deux modules de batterie 3, 4 en série, ils ont leurs collecteurs respectivement reliés, via des résistances 17 ou 18, à la borne 1 positive de la batterie et du module d'extrémité 3 en ce qui concerne le transistor 15 et à la borne négative du module 4 en ce qui concerne le transistor 16.

De plus un point commun aux émetteurs des transistors 15 et 16 est relié au point commun aux modules 3 et 4, ces deux points étant de ce fait au même potentiel.

Tout déséquilibre en tension entre les modules 3, 4 conduit donc à la mise en décharge de celui de ces modules aux bornes duquel est présente la tension la plus élevée, par exemple à la mise en décharge du module 4 via la résistance 18 et le transistor 16, si la tension aux bornes de cet élément 4 est déterminée supérieure à celle présente aux bornes du module 3 par le montage comparateur organisé autour de l'amplificateur 9.

Afin d'éviter une décharge parasite de l'un de ses modules 3, 4 occasionnée par une erreur de mesure portant sur la différence de tension entre modules qui serait due à la tension de décalage, couramment dite "d'offset", du montage comparateur et/ou à l'imprécision des résistances 10, 11 du diviseur, il est prévu un seuil de tension pour le comparateur agencé à cet effet en amplificateur. Un gain est donc fixé au niveau de l'amplificateur 9 par l'intermédiaire de la résistance 12 et d'une résistance de contre-réaction 19 connectée entre la sortie de l'amplificateur 9 et l'entrée inverseuse de ce dernier. La mise en conduction de l'un ou l'autre des transistors 15, 16 ne peut avoir lieu qu'à partir du moment où il existe une différence de tension entre les modules 3 et 4 qui est supérieure à une valeur égale à la tension émetteur-base de celui de ces transistors qui est alors susceptible d'être commandé passant, divisée par le gain de l'amplificateur 9.

Le module de régulation 8 qui est ici identique au module de régulation 7 assure donc vis-à-vis des modules 4 et 5, les fonctions réalisées par ce module de régulation 7 vis-à-vis des modules 3 et 4. En conséquence la tension et la charge de chacun des modules 3, 4, 5 tendent à s'uniformiser sur les références que fixe celui de ces modules qui présente la tension et donc la charge la plus basse. Le dispositif régulateur 6 est susceptible d'être maintenu opérationnel en permanence tant en cours de charge que de décharge, si désiré, étant entendu qu'il peut aussi n'être activé que de manière temporaire par adjonction de moyens de commutation usuels appropriés qui ne sont pas figurés ici.

La simple adjonction de modules de régulation supplémentaires au dispositif de régulation 6 proposé ci-dessus pour une batterie à trois modules en série permet d'adapter ce dispositif de régulation à toute batterie comportant un nombre de modules en série plus grand, la présence de tout élément série supplémentaire impliquant l'adjonction d'un module de régulation supplémentaire au dispositif qui comporte donc "n-1" modules de régulation pour "n" modules de batterie.

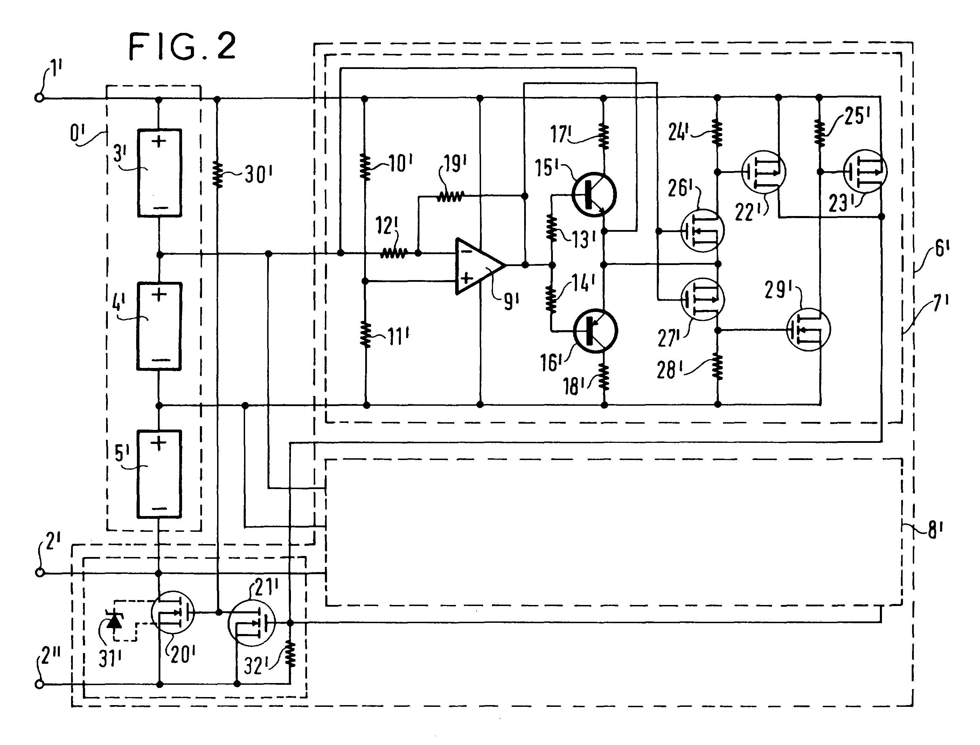

Le dispositif de régulation tel qu'évoqué ci-dessus peut toutefois s'avérer insuffisant si le courant de charge qui est susceptible d'être fourni à un élément excède celui qui est susceptible d'être dérivé à des fins d'équilibrage par un des transistors 15 ou 16, via la résistance 17 ou 18 associée à lui. En effet, sans précaution particulière, le module de régulation associé à un élément de batterie ne suffit pas à éviter que cet élément soit surchargé lorsqu'il a été totalement chargé. Comme le courant de charge fourni à cet élément ne peut qu'être partiellement dérivé, il subsiste un courant en direction du module que ce courant vient inutilement surcharger. Une solution à ce problème est décrite ci-dessous en liaison avec la figure 2.

Une partie du montage précédent se retrouve sur la figure 2 où est à nouveau montrée une batterie ayant "n" modules qui sont raccordés en série entre deux bornes 1' et 2', l'une positive et l'autre négative, auxquelles il est prévu de raccorder une charge, chaque module correspondant préférablement à un seul élément de batterie, comme indiqué plus haut.

Comme précédemment, le nombre "n" de modules de batterie présenté en figure 2 est limité à trois modules série qui sont référencés 3', 4', 5' et qui sont associés à un dispositif de régulation 6'. Ce dispositif comporte "n-1" modules de régulation identiques représentés ici par deux modules de régulation référencés 7' et 8', il comporte aussi un circuit complémentaire commun qui est prévu pour se raccorder entre la borne négative 2' de la batterie et une borne négative 2'' qui est prévue pour servir au raccordement d'un chargeur avec la borne positive 1'.

Le module de régulation 7' correspond à un module de régulation 7, ou 8, tel que défini ci-dessus auquel ont été ajoutés des composants complémentaires, il comporte donc un amplificateur opérationnel 9', des résistances 10' à 14', 17', 18', 19' et deux transistors 15', 16' qui sont agencés et qui ont les mêmes fonctions que les éléments constitutifs 9 à 19 correspondants d'un module de régulation 6.

Lorsque la batterie est en cours de charge, via les bornes 1' et 2'', par l'intermédiaire d'un chargeur non représenté et que le courant maximum Im qui est susceptible d'être dérivé par l'une ou l'autre des résistances d'équilibrage 17' ou 18' est atteint, la tension en sortie de l'amplificateur 9' devient soit très positive, soit très négative, suivant le module de batterie dont le courant de charge est alors dérivé à des fins d'équilibrage.

Selon l'invention on dispose un transistor 20' de limitation de courant de charge, ici de type MOS à déplétion et canal P, connecté à la borne négative 2' de la batterie par son drain, à la borne négative 2'' de raccordement de chargeur par sa source et à la borne positive 1' de la batterie par sa grille, via une résistance de polarisation 30'. Ce transistor 20' permet de réduire progressivement, jusqu'au blocage, le courant de charge de la batterie, lorsque la valeur de courant maximum Im est atteinte au niveau d'une des résistances d'équilibrage 17' ou 18' du module de régulation 7' ou d'une des résistances équivalentes, non représentées, de l'un des autres modules de régulation du dispositif 6'. A cet effet, le transistor de limitation 20' a sa grille reliée au drain d'un transistor 21', ici de même type avec lequel il est ici associé en un montage amplificateur où ces deux transistors ont leurs sources connectées à la borne 2'', et où la grille du transistor 21' est susceptible d'être commandée par chacun des modules de régulation du dispositif 6', comme précisé ci-dessous.

Au niveau de chaque module de régulation et en particulier du module 7', la grille du transistor 21' est ici raccordée aux drains respectifs de deux transistors de régulation 22', 23' de type MOS à canal P. Ces transistors sont respectivement actifs chacun pour un module de batterie différent; ils ont leurs sources respectives reliées à la borne positive 1' de la batterie et leurs grilles respectives qui sont polarisées par des résistances 24' et 25' vis-à-vis de cette borne positive 1'. Deux transistors 26' et 27', complémentaires, ici de type MOS, le premier à canal N et le second à canal P, assurent chacun le contrôle d'un des transistors complémentaires de régulation 22', 23'.

Ces transistors 26', 27' sont reliés en série entre la borne positive 1' à laquelle est reliée le module 3' et la borne négative du module 4'. A cet effet, le drain du transistor 26' est relié à la borne 1', via la résistance 24', la source de ce même transistor est reliée à la source du transistor 27' et au point commun aux émetteurs des transistors 15', 16'; le drain du transistor 27' est relié à la borne négative du module 4', via une résistance 28'. La sortie de l'amplificateur 9 agit simultanément sur les grilles respectives des transistors 26' et 27' et commande l'un ou l'autre d'entre eux en fonction de la polarité du signal présent au niveau de cette sortie d'amplificateur 9 et donc de celui des modules 3' et 4' pour lequel une réduction de courant de charge est nécessaire.

Le transistor 26' est relié par son drain à la grille du transistor de régulation 22' qu'il rend passant lorsque lui-même l'est.

Le transistor 27', dit intermédiaire, est relié par son drain à la grille d'un transistor de régulation 29', de même type que le transistor 26', et à la résistance 28', comme indiqué plus haut. Le transistor 29' est relié par sa source à la borne négative du module 4' et par son drain à la grille du transistor 23' qu'il commande passant lorsqu'il l'est lui-même, c'est-à-dire lorsque le transistor 27' est commandé passant par le signal de sortie de l'amplificateur 9.

Lorsque le courant dérivé par l'un ou l'autre des transistors 15', 16' atteint la valeur maximale fixée par les résistances d'équilibrage 17', 18' et qu'en conséquence le signal de sortie de l'amplificateur 9 est soit fortement positif, soit fortement négatif, il y a mise en conduction soit du transistor 26' soit alternativement du transistor 27'. La mise en conduction du transistor 26' entraîne celle du transistor 22', alors que celle du transistor 27' entraîne celle du transistor 29' et par conséquent celle du transistor 23'. Les conductions respectives des transistors 22', 23' permettent chacune de contrôler la conduction du transistor 21' et en conséquence l'action du transistor de limitation 20' jusqu'au blocage du courant de charge, si besoin est.

La commande du transistor de limitation 20' à l'état bloquant par le transistor 21' est sans effet sur le processus de décharge de la batterie, si cette décharge s'effectue via la borne 2'' et dans la mesure où elle est susceptible de s'effectuer via la diode interne 31' symbolisée avec des connections en pointillé que comporte ce transistor 20'.

De même que précédemment la tension et par conséquent la charge des "n" modules d'une batterie associée à un dispositif de régulation, tel que 6', tendent donc à s'uniformiser dans les conditions déjà évoquées plus haut et ce tant en cours de charge que de décharge, si désiré.

Les dispositifs régulateurs 6, 6' assurent un équilibrage permanent entre modules de batterie tant en phase charge, qu'en phase de décharge ou repos, leur exploitation de façon temporaire n'implique que l'adjonction de moyens appropriés de commutation pour leur mise en et hors service.

## Revendications

1. Dispositif régulateur pour batterie d'accumulateurs électriques et notamment pour batterie (0) dont la tension est fonction de l'état de charge et qui est constituée de "n" modules identiques raccordés en série entre les bornes d'extrémité (1, 2) de cette batterie, le dispositif régulateur comportant "n-1" modules de régulation (7, 8) respectivement affectés chacun à une paire de modules de batteries qui sont raccordés en série,
chaque module de régulation comportant des moyens régulateurs (10 à 19) pour amener, à une même valeur, la tension aux bornes de chacun des modules de batterie de la paire qui lui est associée,
la régulation pour une paire de modules de batterie étant effectuée par la mise en décharge du module de batterie aux bornes duquel est présente la tension la plus élévée, jusqu'à ce que cette tension soit égale à la valeur de la tension de l'autre module de batterie, qui a la valeur la plus faible.

2. Dispositif régulateur, selon la revendication 1, caractérisé en ce qu'il comporte de plus des moyens (20', 21')pour limiter le courant de charge fourni à la batterie (0') au-delà d'un seuil maximal déterminé d'intensité du courant dérivé par un module de régulation (7' ou 8') à partir d'un des deux modules de batterie en série auquel il est affecté, chaque module de régulation disposant de moyens (9', 26', 27') pour déterminer le franchissement d'un tel seuil et de moyens (22' et 23', 29') pour commander en conséquence les moyens de limitation de courant de charge (20', 21').

3. Dispositif régulateur selon la revendication 1, caractérisé en ce qu'il comporte des moyens régulateurs, incorporés dans chaque module de régulation, qui comprennent un montage constitué autour d'un amplificateur opérationnel (9) et de résistances (10, 11) pour comparer les tensions présentes aux bornes des deux modules de batterie en série auxquels ce module de régulation est affecté, et des moyens de commutation (15, 16) alternativement commandés, l'un ou l'autre, suivant la polarité de la tension présente en sortie du montage comparateur pour brancher une résistance d'équilibrage (17 ou 18) aux bornes de celui des deux modules de batterie en série aux bornes duquel la tension est la plus forte.

4. Dispositif régulateur selon les revendications 1 à 3, caractérisé en ce qu'il comporte des moyens de limitation de courant de charge constitués par un montage comprenant au moins un transistor de limitation (20') qui est inséré entre une des deux bornes d'extrémité de la batterie (2') prévue pour le raccordement d'une charge et une (2") des deux bornes, prévues pour le raccordement d'un chargeur, qui a même polarité qu'elle, en ce que ce montage est commandé au travers de deux transistors intermédiaires (26', 27') alternativement commandés, l'un ou l'autre, suivant la polarité de la tension présente en sortie de l'amplificateur opérationnel (9') du montage comparateur et au delà d'un seuil maximal d'intensité de courant dérivé au moment par celle des résistances d'équilibrage (17' ou 18') alors alimentée et en ce que chacun des transistors intermédiaires est associé à au moins un transistor complémentaire (22' ou 23' et 29') lui permettant d'agir séparément sur le transistor de limitation (20').

5. Dispositif régulateur, selon au moins l'une des revendications 1 à 4, caractérisé en ce qu'il assure un équilibrage permanent entre modules de batterie en phase charge, décharge et/ou repos.

## Patentansprüche

1. Reglervorrichtung für eine elektrische Akkumulatorenbatterie, insbesondere für eine Batterie (0), deren Spannung vom Ladezustand abhängig ist und die sich aus "n" identischen, zwischen den Anschlußklemmen (1, 2) dieser Batterie in Reihe geschalteten Modulen zusammensetzt, mit "n-1" Reglermodulen (7, 8), die jeweils einem Paar von in Reihe geschalteten Batteriemodulen zugewiesen sind, wobei jedes Reglermodul Reglermittel (10 bis 19) umfaßt, um die Spannung an den Klemmen von jedem Batteriemodul des ihm zugeordneten Paars auf einen gleichen Wert zu bringen, wobei die Regelung für ein Paar von Batteriemodulen ausgeführt wird, indem dasjenige Batteriemodul, an dessen Klemmen die höhere Spannung vorliegt, entladen wird, bis diese Spannung gleich dem Wert der Spannung des anderen Batteriemoduls ist, das die niedrigere Spannung hat.

2. Reglervorrichtung nach Anspruch 1, dadurch gekennzeichnet, daß sie ferner Mittel (20', 21') umfaßt, um den der Batterie (0') gelieferten Ladestrom oberhalb einer vorgegebenen maximalen Schwelle der Stärke des von einem Reglermodul (7', 8') von einem der zwei in Reihe geschalteten Batteriemodule, dem es zugewiesen ist, abgezweigten Stroms zu begrenzen, wobei jedes Reglermodul über Mittel (9', 26', 27') zum Erkennen der Überschreitung einer solchen Schwelle und Mittel (22' und 23', 29') zum entsprechenden Steuern der Ladestrombegrenzungsmittel (20', 21') verfügt.

3. Reglervorrichtung nach Anspruch 1, dadurch gekennzeichnet, daß sie in jedes Reglermodul eingebaute Reglermittel aufweist, die eine um einen Operationsverstärker (9) aufgebaute Schaltung und Widerstände (10, 11) zum Vergleichen der Spannungen, die an den Klemmen der zwei in Reihe geschalteten Batteriemodule vorliegen, denen dieses Reglermodul zugewiesen ist, und Schaltmittel (15, 16) umfassen, die alternativ, das eine oder das andere, je nach Polarität der am Ausgang der Komparatorschaltung vorliegenden Spannung gesteuert werden, um einen Ausgleichswiderstand (17 oder 18) an den Klemmen desjenigen der zwei in Reihe geschalteten Batteriemodule abzuzweigen, an dessen Klemmen die Spannung höher ist.

4. Reglervorrichtung nach den Ansprüchen 1 bis 3, dadurch gekennzeichnet, daß sie Mittel zum Begrenzen des Ladestroms umfaßt, die aus einer Schaltung bestehen, die wenigstens einen Begrenzungstransistor (20'), der zwischen einer der Anschlußklemmen (2') der Batterie, die zum Anschließen einer Last vorgesehen ist, und einer (2") der zwei Klemmen eingefügt ist, die zum Anschließen einer Ladevorrichtung vorgesehen ist und die gleiche Polarität wie sie hat, daß die Schaltung über zwei Zwischentransistoren (26', 27') gesteuert ist, die alternativ, der eine oder der andere, je nach Polarität der am Ausgang des Operationsverstärkers (9') vorliegenden Spannung und oberhalb einer maximalen Schwelle der Stärke des Stroms, der momentan von dem zur Zeit Versorgten der Ausgleichswiderstände (17' oder 18') abgezweigt wird, gesteuert werden, und daß jeder der Zwischentransistoren wenigstens einem komplementären Transistor (22' oder 23' und 29') zugeordnet ist, der es ihm ermöglicht, getrennt auf den Begrenzungstransistor (20') einzuwirken.

5. Vorrichtung nach wenigstens einem der Ansprüche 1 bis 4, dadurch gekennzeichnet, daß sie einen ständigen Ausgleich zwischen Batteriemodulen in Lade-, Entlade- oder Ruhephase gewährleistet.

## Claims

1. A regulator circuit for a battery of electrical storage cells, and in particular for a battery (0) whose voltage is a function of its state of charge and which is constituted by "n" identical modules connected in series between end terminals (1, 2) of the battery, the regulator circuit comprising "n-1" regulation modules (7, 8) each respectively associated with a pair of series-connected modules of the battery,
each regulation module including regulator means (10 to 19) for bringing the voltage across the terminals of each of the battery modules of the pair with which it is associated to a common value,
a pair of battery modules being regulated by discharging the battery module at the terminals which have the greater voltage, until that voltage is equal to the value of the voltage of the other battery module which has the smaller value.

2. A regulator circuit according to claim 1, characterized in that it also comprises charging current limitation means (20', 21') for limiting the charging current delivered to the battery (0'), said means operating above a determined maximum current threshold for the current diverted by a regulation module (7' or 8') from one or other of the two series-connected modules of the battery with which the regulation module is associated, each regulation module having means (9', 26', 27') for determining when such a threshold has been crossed, and means (22' and 23', 29') for applying corresponding control to the charging current limitation means (20', 21').

3. A regulator circuit according to claim 1, characterized in that it comprises regulator means incorporated in each regulation module, comprising a circuit built around an operational amplifier (9) and resistors (10, 11) for preparing the voltages present across the terminals of the two series-connected battery modules with which the regulation module is associated, and switching means (15, 16) controlled in mutual phase opposition depending on the polarity of the voltage present at the output from the comparator circuit so as to connect a balancing resistor (17 or 18) across the terminals of that one of the two series-connected battery modules having the larger voltage across its terminals.

4. A regulator circuit according to any one of claims 1 to 3, characterized in that includes charging current limitation means constituted by a circuit comprising at least one current-limiting transistor (20') which is inserted between one of the two end terminals of the battery (2') that is provided for connection to a load, and one (2") of the two terminals provided for connection purposes on a charger, said charger terminal being of the same polarity as the battery terminal, in that the circuit is controlled via two intermediate transistors (26', 27') that are controlled in phase opposition, one or other of them being switched on depending on the polarity of the voltage present at the output from the operational amplifier (9') of the comparator circuit, and beyond a maximum current threshold for current diverted at that time by that one of the balancing resistors (17' or 18') which is then carrying current, and in that each of the intermediate transistors is associated with at least one additional transistor (22' or 23' and 29') enabling it to act separately on the current-limiting transistor (20').

5. A regulator circuit according to any one of claims 1 to 4, characterized in that it provides continuous balancing between the modules of a battery during charging, discharging, and/or at rest.
